# EUROPÄISCHE PATENTSCHRIFT

(11) **EP 1 228 009 B1**
(45) Veröffentlichungstag und Bekanntmachung des Hinweises auf die Patenterteilung: **03.03.2004**
(21) Anmeldenummer: 01956359.2
(22) Anmeldetag: 25.07.2001
(51) Int. Cl.: C03B 33/08, C03B 23/22, B24B 9/14

(54) **VERFAHREN ZUR HERSTELLUNG EINES BRILLENGLASES**
METHOD FOR PRODUCING A SPECTACLE LENS
PROCEDE POUR LA PRODUCTION D'UN VERRE DE LUNETTES

(30) Priorität: 25.07.2000 DE 10036158
(43) Veröffentlichungstag der Anmeldung: 07.08.2002
(73) Patentinhaber: Optische Werke G. Rodenstock, 80469 München (DE)
(72) Erfinder: KÜPPER, Lutz, 94253 Bischofsmais (DE); SIMKE, Andreas, 94259 Kirchberg (DE); ROHR, Dieter, 94209 Regen (DE)
(74) Vertreter: Meissner, Bolte & Partner
(86) Internationale Anmeldenummer: PCT/DE2001/002767
(87) Internationale Veröffentlichungsnummer: WO 2002/008131

(56) Entgegenhaltungen:
- EP-A- 0 062 484
- DE-A- 4 003 002
- DE-B- 1 244 346
- GB-A- 1 208 943
- US-A- 3 672 858
- PATENT ABSTRACTS OF JAPAN vol. 11, no. 60, 24. Februar 1987 (1987-02-24) & JP 61 219726 A (TAKASHI T), 30. September 1986 (1986-09-30)
- PATENT ABSTRACTS OF JAPAN vol. 7, no. 91, 15. April 1983 (1983-04-15) & JP 58 020743 A (SHIGEO T), 7. Februar 1983 (1983-02-07)

## Beschreibung

### Technisches Gebiet

Die Erfindung bezieht sich auf ein Verfahren zur Herstellung eines Brillenglases.

### Stand der Technik

Um ein möglichst leichtes Glas zu erhalten, bemühen sich die Hersteller von Brillengläsern, diese so zu fertigen, daß die kritische Dicke - die Randdicke bei Gläsern mit Minus-Wirkung bzw. die Mittendicke bei Gläsern mit Plus-Wirkung ― so gering wie möglich ist. Beispielsweise wird bei Gläsern mit Plus-Wirkung angestrebt, daß der Umfangsrand, der für eine bestimmte, vom Kunden vorgegebene Brillenfassung benötigt wird, praktisch "randscharf" ist.

Um dies zu erreichen, werden nach dem Stand der Technik Randbearbeitungs-Fertigungsschritte und Flächenbearbeitungs-Fertigungsschritte miteinander gemischt.

Um zu vermeiden, daß das Brillenglas mehrfach in einer jeweils für die Randbearbeitung bzw. die Flächenbearbeitung geeigneten Weise aufgenommen werden muß, ist in der DE 40 03 002 A1 ein spezieller Block vorgeschlagen worden, der auf die fertige Fläche des Blanks - in der Regel die konvexe Fläche - aufgesetzt wird, und der sowohl eine Flächenbearbeitung der - in der Regel konkaven - zweiten Fläche als auch eine Randbearbeitung ohne erneute Aufnahme des Brillenglases erlaubt. Auf diese Offenlegungsschrift wird im übrigen zur Erläuterung aller hier nicht näher erläuterten Einzelheiten ausdrücklich verwiesen.

Nachteilig bei allen bekannten Verfahren und Vorrichtungen, bei denen nicht zunächst die beiden Flächen und erst im Anschluß an die Flächenbearbeitung der Rand bearbeitet wird, ist, daß das Brillenglas bei der Durchführung von Vergütungs- und insbesondere von Beschichtungsvorgängen in einer Aufdampfanlage nicht mehr rund ist. Damit ist es erforderlich, spezielle Masken zusammen mit dem Brillenglas in die Aufdampfkalotte einzulegen, damit nicht durch die entstehenden freien Räume andere Brillengläser an nicht erwünschten Stellen bedampft werden.

Aber auch bei anderen Fertigungsschritten ist es unangenehm, ein nicht mehr "rohrundes" Brillenglas, sondern ein entsprechend der ausgewählten Brillenfassung bereits vorgerandetes Brillenglas bearbeiten zu müssen.

### Darstellung der Erfindung

Der Erfindung liegt die Aufgabe zugrunde, ein Verfahren zur Herstellung eines Brillenglases, bei dem insbesondere die kritische Dicke minimiert werden soll, anzugeben, bei dem trotz Berücksichtigung der späteren Außenkontur während des Bearbeitungsvorgangs kein "unrundes" Brillenglas bearbeitet werden muß.

Eine erfindungsgemäße Lösung dieser Aufgabe wird mit den im Anspruch 1 angegebenen Verfahrensschritten erhalten. Weiterbildungen der Erfindung sind Gegenstand der Ansprüche 2 ff..

Dem erfindungsgemäßen Verfahren liegt dabei der allgemeine Gedanke zugrunde, anstelle des beim Stand der Technik zur Randung verwendeten zerspanenden Vorganges - in der Regel ein Schleifvorgang - , mit dem der Rand des Brillenglases auf die spätere Form hin bearbeitet wird, einen Schneidvorgang zu verwenden, so daß das Randstück als ringförmiges Teil erhalten bleibt, das für die weitere Fertigung als Handhabe verwendet werden kann.

Bei dem erfindungsgemäßen Verfahren wird zunächst in an sich bekannter Weise ein einseitig fertiges Brillenglas (im folgenden auch als Blank bezeichnet) mit einer vorgegebenen Außenkontur und insbesondere einer runden Außenkontur hergestellt. Selbstverständlich ist es aber auch möglich, anstelle einer runden Außenkontur eine spezielle andere Außenkontur, wie beispielsweise eine elliptische Außenkontur zu wählen.

In der Regel ist dabei die fertige Fläche des Blanks die konvexe Vorderfläche, selbstverständlich ist es aber auch möglich, als fertige Fläche die - in der Regel - konkave augenseitige Fläche zu wählen.

Aus dem Blank wird ein Teil mit einer Außenkontur herausgeschnitten, die in etwa der des in die jeweilige Fassung eingesetzten Brillenglases entspricht. Im Hinblick auf die folgenden Verfahrensschritte ist dabei die Außenkontur des herausgeschnittenen Teils in der Regel nicht exakt gleich der Außenkontur des späteren Brillenglases, die Außenkontur ist vielmehr geringfügig größer.

Der herausgeschnittene Teil wird mit dem Randstück, das in der Regel die Form eines Rings hat, derart zusammengefügt, daß das Randstück als Handhabe für die weitere Bearbeitung dient.

Dabei kann das Randstück für die Herstellung der zweiten Fläche verwendet werden.

Das Herausschneiden des zentralen Teils, der das spätere Brillenglas bildet, kann dabei insbesondere mit einem Laser erfolgen.

Der eigentliche Schneidvorgang kann dabei so ausgeführt werden, daß die Schnittflächen des für das Brillenglas verwendeten Teils und des Randstücks die Form eines Zylinders haben, besonders bevorzugt ist es jedoch, wenn die Schnittflächen die Form eines Konus bzw. eines Kegels mit einem Kegelwinkel α haben.

Im ersteren Falle "fällt" der zentrale Teil aus dem Randstück nach der Vollendung des Schneidvorgangs heraus, so daß der zentrale Teil mit dem Randstück beispielsweise über einen Spannring oder eine Manschette verbunden werden muß. Um diese Verbindung zu ermöglichen, ist es bevorzugt, wenn das Randstück durch den Anschnitt einen Spalt erhält: Damit ist es möglich, das Randstück so zusammenzuquetschen, daß der zentrale Teil in dem Randstück gehalten ist.

Bei der zweiten - bevorzugten - Möglichkeit wird das zentrale Teil, der das Brillenglas bildet, gegenüber dem Randstück derart abgesenkt, daß es sich an der konischen Innenfläche des Randstücks anlegt. Besonders bevorzugt ist es, wenn das Teil an dem Randstück fixiert wird. Das Fixieren kann beispielsweise durch Laserschweißen und/oder durch Kleben erfolgen.

Das Randstück dient dabei als - in der Regel runde - Handhabe für die weitere Bearbeitung. Damit ist es möglich, das Randstück als Maske beispielsweise bei der Vergütung zu verwenden.

Besonders bevorzugt ist es jedoch, wenn - wie bereits ausgeführt -das Randstück als Handhabe für die weiteren Bearbeitungsschritte verwendet wird, wobei das Randstück für die Herstellung der zweiten Fläche dienen kann. Dabei ist es möglich, daß bei der Bearbeitung der zweiten Fläche auch das Randstück bearbeitet und insbesondere zerspant und poliert wird.

Das Randstück kann darüberhinaus als Hilfe beim Blocken des Brillenglases für bestimmte Bearbeitungsvorgänge dienen.

Das Randstück kann darüberhinaus als Informationsträger - beispielsweise durch Aufbringen eines Barcodes, einer Auftragsnummer etc. für die weitere Bearbeitung und die Auslieferung des Brillenglases dienen.

Weiterhin erlaubt das Randstück eine vollautomatische Messung ohne visuelle Ausrichtung.

### Kurze Beschreibung der Zeichnungen

Die Erfindung wird nachstehend ohne Beschränkung des allgemeinen Erfindungsgedankens anhand von Ausführungsbeispielen unter Bezugnahme auf die Zeichnung näher beschrieben, in der zeigen:
- Fig. 1a und 1b: ein erstes Ausführungsbeispiel der Erfindung,
- Fig. 2a und 2b: ein zweites Ausführungsbeispiel der Erfindung.

### Beschreibung von Ausführungsbeispielen

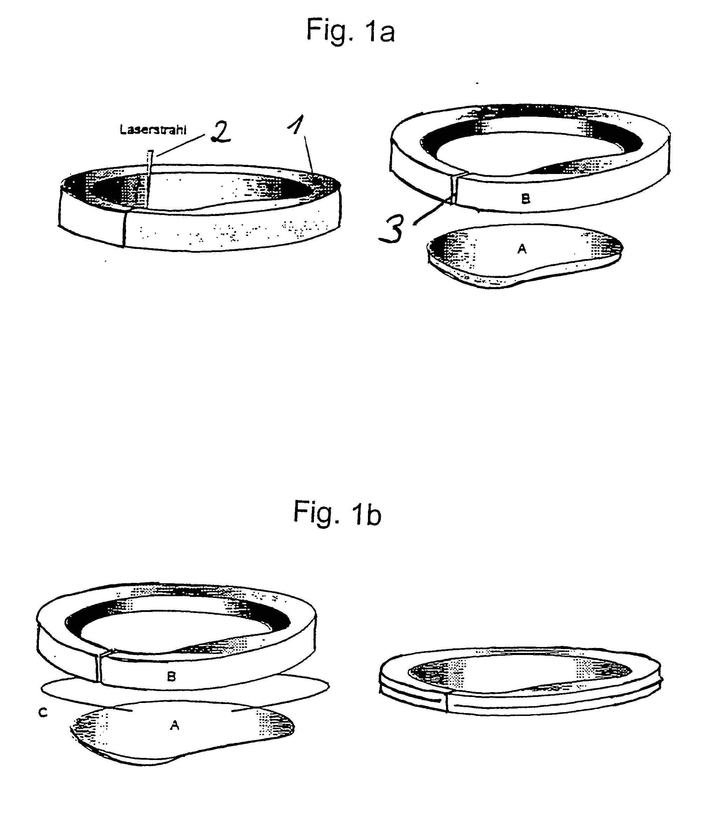

Fig. 1a zeigt ein erstes Ausführungsbeispiel der Erfindung. Aus einem rohrunden Blank 1 wird mittels eines Laserstrahls 2 ein Teil A ausgeschnitten, dessen Außenkontur in etwa der Form des späteren Brillenglases entspricht. Die Schnittflächen des Teils A und des verbleibenden Randstücks B haben eine zylindrische Form, so daß das Teil A aus dem Randstück B herausfallen kann.

Um das Teil A bei Bedarf in dem Randstück B befestigen zu können, ist der Schneidevorgang so geführt, daß beim Anschnitt ein Spalt 3 in dem Randstück B entsteht. Durch den Spalt 3 ist es möglich, das Teil A in dem Randstück B dadurch zu befestigen, daß dieses mittels eines Spannrings C zusammengedrückt wird. Dies ist in Fig. 1 b dargestellt Das rechte Teilbild in Fig. 1 b zeigt das Randstück B, in das das Teil A eingesetzt und mittels eines Spannrings C festgehalten ist.

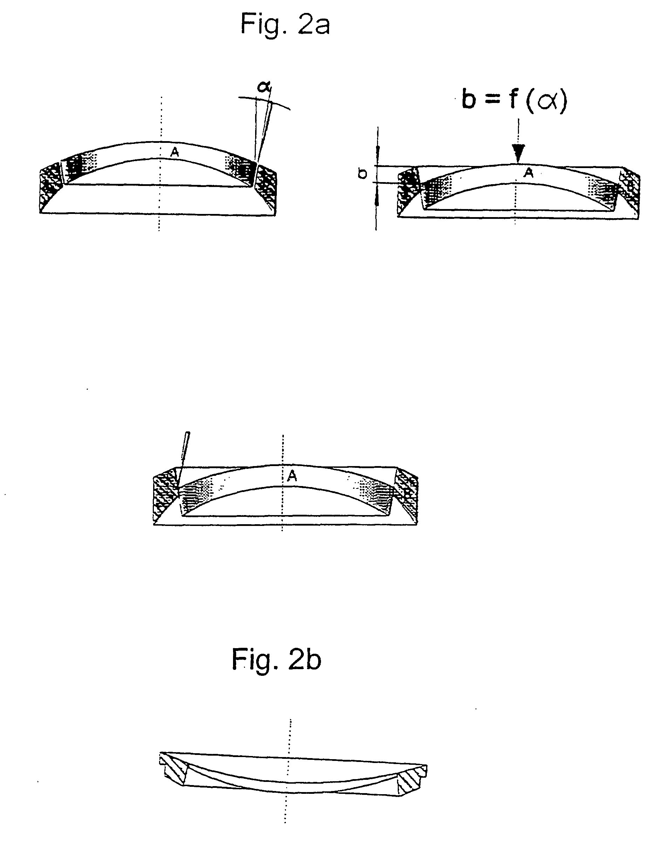

Fig. 2a zeigt ein zweites Ausführungsbeispiel der Erfindung, bei dem gleiche Teile mit den gleichen Bezugszeichen versehen sind, so daß auf eine erneute Vorstellung verzichtet wird.

Im Gegensatz zu dem in Fig. 1 dargestellten Ausführungsbeispiel wird bei dem in Fig. 2 dargestellten zweiten Ausführungsbeispiel der Schneidvorgang so ausgeführt, daß die sich ergebenden Schnittflächen nicht zylindrisch sind, sondern eine konische Form haben. Hierdurch legt sich das Teil A an das Teil B an, nachdem es um eine Strecke b abgesenkt worden ist, die eine Funktion des Konuswinkel ist. Im abgesenkten Zustand kann das Teil A in dem Randstück B beispielsweise mittels Laserschweißen fixiert werden (s. Fig. 2a, unteres Bild).

Die Teile A und B können dann in herkömmlicher Weise bearbeitet, wie beispielsweise zerspant, poliert und vergütet werden. Fig. 2b zeigt die Teile A und B nach der mechanischen Bearbeitung.

Das erfindungsgemäße Verfahren hat eine Reihe von Vorteilen:

So erhält man eine Kostenreduzierung einer Mittendickenminimierung bei großen Stückzahlen durch die gute Abdichtung zwischen dem Randteil B und dem Teil A bei der Vergütung. Darüberhinaus wird die Zahl der erforderlichen Aufnahmeringe verringert.

Randdünne Gläser werden durch das Randteil B gegen Temperaturverzug stabilisiert, der dünne Rand wird gegenüber Bearbeitungskräften verstärkt und gleichzeitig geschützt. Darüberhinaus stellt das Randteil B auch einen Verletzungsschutz bei der Handhabung dar.

Bei dem erfindungsgemäßen Verfahren können alle bekannten Polierverfahren angewendet werden. Ferner werden unrunde Gläser beim Feststoffblocken voll unterstützt. Weiterhin ergibt sich eine Qualitätssteigerung dadurch, daß Halteklammern beim Reinigen oder Vergüten am Randteil und nicht am eigentlichen Brillenglas ansetzen.

Ferner wird durch den Höhenversatz Ring zu Innenteil erreicht, daß im Bereich der Überrandschärfe wieder Material für den Vollring zur Verfügung steht. Unter dem Begriff Überrandschärfe versteht man, daß bei einem Plusglas mit konvexer Form dieses Glas bei wachsendem Durchmesser "irgendwann randscharf" wird. Wird der Durchmesser weiter vergrößert, ist kein Material mehr vorhanden.

Das Randteil B kann darüberhinaus als Informationsträger verwendet werden.

Vor allem aber kann eine Zentrierung des Außenrandes durchgeführt werden. Hierzu kann beispielsweise beim Gravieren im geblockten Zustand eine Strichmarke auf dem Fertigungsrand angebracht werden, so daß eine vollautomatische Entrandung ohne visuelles Ausrichten nach dem Vergüten gegeben ist.

Letztlich kann das Glas ohne visuelle Ausrichtung vollautomatisch gemessen werden.

## Patentansprüche

1. Verfahren zur Herstellung eines Brillenglases, bei dem insbesondere die kritische Dicke minimiert werden soll, mit folgenden Schritten
- zunächst wird ein einseitig fertiges Brillenglas (Blank) mit einer vorgegebenen Außenkontur und insbesondere runder Außenkontur hergestellt,
- aus dem Blank wird ein Teil mit einer Außenkontur herausgeschnitten, die in etwa der des Brillenglases entspricht,
- der herausgeschnittene Teil wird mit dem Randstück axial versetzt derart zusammengefügt, daß das Randstück als Handhabe für die weitere Bearbeitung dient.

2. Verfahren nach Anspruch 1,
**dadurch gekennzeichnet, daß** das Randstück für die Herstellung der zweiten Fläche dient.

3. Verfahren nach einem der Ansprüche 1 bis 2,
**dadurch gekennzeichnet, daß** ein Laser für das Herausschneiden des Teils verwendet wird.

4. Verfahren nach den Ansprüchen 1 bis 2 oder nach Anspruch 3,
**dadurch gekennzeichnet, daß** das Randstück die Form eines Rings aufweist.

5. Verfahren nach einem der Ansprüche 1 bis 4,
**dadurch gekennzeichnet, daß** das Herausschneiden derart erfolgt, daß die Schnittflächen des Teils und des Randstücks die Form eines Zylinders haben.

6. Verfahren nach Anspruch 5,
**dadurch gekennzeichnet, daß** das Randstück durch den Anschnitt einen Spalt erhält.

7. Verfahren nach Anspruch 5 oder 6,
**dadurch gekennzeichnet, daß** das Teil und das Randstück durch einen Spannring bzw. eine Manschette miteinander verbunden werden.

8. Verfahren nach einem der Ansprüche 1 bis 4,
**dadurch gekennzeichnet, daß** das Herausschneiden derart erfolgt, daß die Schnittflächen des Teils und des Randstücks die Form eines Kegels haben.

9. Verfahren nach Anspruch 8,
**dadurch gekennzeichnet, daß** nach dem Herausschneiden das Teil gegenüber dem Randstück derart abgesenkt wird, daß es sich an der konischen Innenfläche des Randstücks anlegt.

10. Verfahren nach Anspruch 9,
**dadurch gekennzeichnet, daß** das Teil an dem Randstück fixiert wird.

11. Verfahren nach Anspruch 10,
**dadurch gekennzeichnet, daß** das Fixieren durch Laserschweißen und/oder durch Kleben erfolgt.

12. Verfahren nach einem der Ansprüche 1 bis 11,
**dadurch gekennzeichnet, daß** als Blank ein konvexseitig fertiger Blank verwendet wird.

13. Verfahren nach einem der Ansprüche 1 bis 12,
**dadurch gekennzeichnet, daß** bei der Bearbeitung der zweiten Fläche auch das Randstück bearbeitet und insbesondere zerspant und poliert wird.

14. Verfahren nach Anspruch 13,
**dadurch gekennzeichnet, daß** das Randstück als Hilfe beim Blocken des Brillenglases dient.

15. Verfahren nach einem der Ansprüche 1 bis 14,
**dadurch gekennzeichnet, daß** das Brillenglas zusammen mit dem Randstück vergütet und insbesondere in einer Beschichtungsanlage beschichtet wird.

16. Verfahren nach einem der Ansprüche 1 bis 15,
**dadurch gekennzeichnet, daß** das Randstück als Informationsträger für die weitere Bearbeitung dient.

## Claims

1. Method for producing a spectacle lens, in which in particular the critical thickness is intended to be minimised, having the following steps
- first a spectacle lens which is finished on one side (blank) is produced with a prescribed outer contour and in particular with a round outer contour,
- a part with an outer contour is cut out of the blank, which outer contour corresponds approximately to that of the spectacle lens,
- the cut out part is connected with the edge piece axially displaced such that the edge piece serves as a handle for further processing.

2. Method according to claim 1,
**characterised in that** the edge piece serves for producing the second face.

3. Method according to one of the claims 1 to 2,
**characterised in that** a laser is used for cutting out the part.

4. Method according to claims 1 to 2 or according to claim 3,
**characterised in that** the edge piece has the form of a ring.

5. Method according to one of the claims 1 to 4,
**characterised in that** the cutting out is effected such that the cut faces of the part and of the edge piece have the form of a cylinder.

6. Method according to claim 5,
**characterised in that** the edge piece obtains a gap due to the cut.

7. Method according to claim 5 or 6,
**characterised in that** the part and the edge piece are connected to each other by means of a clamping ring or a collar.

8. Method according to one of the claims 1 to 4,
**characterised in that** the cutting out is effected such that the cut faces of the part and of the edge piece have the form of a cone.

9. Method according to claim 8,
**characterised in that**, after cutting out, the part is sunk relative to the edge piece such that it abuts against the conical inner face of the edge piece.

10. Method according to claim 9,
**characterised in that** the part is fixed to the edge piece.

11. Method according to claim 10,
**characterised in that** the fixing is effected by means of laser welding and/or by means of gluing.

12. Method according to one of the claims 1 to 11,
**characterised in that** a blank which is finished on the convex side is used as blank.

13. Method according to one of the claims 1 to 12,
**characterised in that**, during processing of the second face, the edge piece is also processed and in particular machined and polished.

14. Method according to claim 13,
**characterised in that** the edge piece serves as an aid during blocking of the spectacle lens.

15. Method according to one of the claims 1 to 14,
**characterised in that** the spectacle lens together with the edge piece is coated and in particular is coated in a coating plant.

16. Method according to one of the claims 1 to 15,
**characterised in that** the edge piece serves as an information carrier for further processing.

## Revendications

1. Procédé de fabrication d'un verre de lunette, dans lequel notamment l'épaisseur critique doit être minimisée, selon les étapes suivantes :
- en premier lieu un verre de lunette avec une face finie (rendu brillant) est fabriqué avec un contour externe déterminé et notamment un contour externe arrondi,
- dans le brillant, une partie est découpée avec un contour externe qui correspond pratiquement à celui du verre de lunette,
- la pièce découpée est assemblée avec la tranche axialement décalée, de telle sorte que la tranche serve de prise pour l'usinage ultérieur.

2. Procédé selon la revendication 1, **caractérisé en ce que** la tranche sert à la fabrication de la seconde surface.

3. Procédé selon l'une des revendications 1 à 2, **caractérisé en ce qu'**un laser est utilisé pour le découpage de la pièce.

4. Procédé selon les revendications 1 à 2 ou selon la revendication 3, **caractérisé en ce que** la tranche présente la forme d'un anneau.

5. Procédé selon l'une des revendications 1 à 4, **caractérisé en ce que** le découpage s'effectue de telle sorte que les surfaces de coupe de la pièce et de la tranche aient la forme d'un cylindre.

6. Procédé selon la revendication 5, **caractérisé en ce que** le découpage provoque une fente dans la tranche.

7. Procédé selon la revendication 5 ou 6, **caractérisé en ce que** la pièce et la tranche sont reliées entre elles par un anneau de serrage ou bien un manchon.

8. Procédé selon l'une des revendications 1 à 4, **caractérisé en ce que** le découpage est effectué de telle sorte que les surfaces de coupe de la pièce et de la tranche ont la forme d'un cône.

9. Procédé selon la revendication 8, **caractérisé en ce que**, après le découpage, la pièce est abaissée par rapport à la tranche de telle sorte qu'elle se place contre la surface interne conique de la tranche.

10. Procédé selon la revendication 9, **caractérisé en ce que** la pièce est fixée à la tranche.

11. Procédé selon la revendication 10, **caractérisé en ce que** la fixation se fait par soudure au laser et/ou avec de la colle.

12. Procédé selon l'une des revendications 1 à 11, **caractérisé en ce que** on utilise comme brillant un rendu brillant côté convexe

13. Procédé selon l'une des revendications 1 à 12, **caractérisé en ce que** lors de l'usinage de la seconde surface, la tranche est également traitée et notamment usinée et polie.

14. Procédé selon la revendication 13, **caractérisé en ce que** la tranche est utilisée comme auxiliaire de blocage du verre de lunette.

15. Procédé selon l'une des revendications 1 à 14, **caractérisé en ce que** le verre de lunette est traité en même temps que la tranche et est notamment enduit dans un dispositif d'enduction.

16. Procédé selon l'une des revendications 1 à 15, **caractérisé en ce que** la tranche sert de support d'information pour le traitement ultérieur.
